# EUROPÄISCHE PATENTSCHRIFT

(11) **EP 2 179 836 B1**
(45) Veröffentlichungstag und Bekanntmachung des Hinweises auf die Patenterteilung: **05.01.2011**
(21) Anmeldenummer: 08075849.3
(22) Anmeldetag: 24.10.2008
(51) Int. Cl.: B29C 51/12

(54) **Verfahren zum Herstellen eine Formhaut**
Method for the production of a plastic skin
Procédé de fabrication d'une peau de moulage

(43) Veröffentlichungstag der Anmeldung: 28.04.2010
(73) Patentinhaber: Faurecia Innenraum Systeme GmbH, 76767 Hagenbach (DE)
(72) Erfinder: Engel, Jürgen, 57539 Bitzen/Dünebusch (DE); Bonhoff, Norbert, 46325 Borken (DE); Chimelak, Rob, 48093 Warren, Michigan (US); Godefroy, Beau, 92250 La Garenne Colombes (FR)
(74) Vertreter: Pfenning, Meinig & Partner GbR

(56) Entgegenhaltungen:
- EP-A- 1 284 182
- EP-A- 1 864 782
- DE-A1- 4 313 043
- US-A1- 2007 132 132

## Beschreibung

Die vorliegende Erfindung betrifft ein Vefahren zum Herstellen einer Formhaut . Die Formhaut ist insbesondere für Innenverkleidungsteile von Kraftfahrzeugen geeignet.

Es ist bekannt, erwärmte Kunststofffolien mittels Unterdruck in eine Negativform zu ziehen, damit die Folie die Form bzw. auch die Oberflächenprägung der Negativform annimmt. Ein solches Verfahren ist als "In-Mold-Graining" (IMG) bekannt.

Nachfolgend ist eine Hinterschäumung der Formhaut möglich bzw. eine Kaschierung auf einem Träger, um so ein fertiges Innenverkleidungsteil für Kraftfahrzeuge, etwa eine Instrumententafel, zu erhalten.

Insbesondere für exklusivere Modelle einer Baureihe von Fahrzeugen besteht ein Bedarf, hochwertige Applikationen (beispielsweise aus Holz oder Metall) in das Innenverkleidungsteil zu integrieren. Hierbei sollte der Randabstand des Einlegers zu der umgebenden Formhaut relativ gering sein (= Spaltfreiheit), um ein ansprechendes Äußeres zu gewährleisten.

Es ist beispielsweise möglich, Einschnitte in der Formhaut anzubringen und manuell die Einleger einzusetzen. Dies ist allerdings sehr kostenintensiv.

Eine weitere Möglichkeit besteht darin, Einleger während des Herstellungsprozesses der Formhaut mit einzubringen. Hier ist allerdings eine genaue Platzierung des Einlegers bezüglich der übrigen Formhaut sowie eine Schonung des Einlegers (beispielsweise zur Vermeidung von ungewollter Aufprägung der Oberflächenstruktur des Negativformwerkzeugs auf dem Einleger) beachtlich.

Eine weitere Möglichkeit ist in der Druckschrift US 2007/0132132 A1 gezeigt. Der Einleger wird beispielsweise mittels eines Vakuumverfahrens auf der Oberfläche einer Negativform gehalten. Anschließend wird über das Anlegen eines weiteren Vakuums eine Folie in die Negativform gesogen, wobei sich die Folie den Konturen des Einlegers anpassen soll. Eine Vorformung der Folie ist nicht vorgesehen. Dadurch ist es möglich, dass die Haut, welche sich um den Einleger herum anlegt, unterschiedliche Dicken aufweist und so die Passgenauigkeit des Einlegers in der Haut beeinträchtigt.

Dokument DE 4 313 043 offenbart ein Verfahren zum Tiefziehen einer Folie mit ein Positiv- und ein Negativ-Form.

Der Erfindung liegt daher die Aufgabe zugrunde, ein Verfahren zum Herstellen einer Formhaut bzw. eine Formhaut zu schaffen, bei der zu geringen Kosten ein Einleger mit einer hochwertigen Anmutung passgenau in eine Formhaut eingepasst werden kann.

Diese Aufgabe wird durch ein Verfahren zum Herstellen einer Formhaut nach Anspruch 1 bzw. durch eine Formhaut nach Anspruch 12 gelöst.

Bei dem erfindungsgemäßen Verfahren zum Herstellen einer Formhaut werden folgende Schritte durchgeführt:
a) Einlegen einer Folie in einen Spannrahmen,
b) Verfahren des Spannrahmens gegen eine Positivform zur (Vor-)Verformung der Folie,
c) Aufstempeln eines Einlegers auf der der Positivform abgewandten Seite der Folie,
d) Verfahren der Positivform in eine zumindest bereichsweise korrespondierende Negativform und
e) Aufbringen von Unterdruck von der Negativform aus zur Aufprägung der Form und/oder Oberflächenstruktur der Negativform auf die mit dem Einleger belegte Folie.

Das Verfahren des Spannrahmens gegen eine Positivform zur (Vor-)Verformung der Folie stellt hierbei sicher, dass eine relativ gleichmäßige Vordehnung der Folie erfolgt. Dies ist besonders gut kombinierbar mit dem Aufstempeln eines Einlegers. Hier bildet die Positivform ein Widerlager für den Einleger. Dies ist doppelt vorteilhaft, da die Positivform (die auch beispielsweise Vakuumöffnungen zum Anziehen/Positionieren der Folie haben kann) ein mechanisch festes Widerlager bildet und durch die vorgegebene Form sichergestellt wird, dass bei dem anschließenden Vakuumformprozess im Negativformwerkzeug kein Verzug bzw. Verschieben des Einlegers aufgrund ungleichmäßiger Dehnungen erfolgt.

Erst danach kommt es zu einem Verfahren der Positivform in die zumindest bereichsweise korrespondierende Negativform. Anschließend wird durch Aufbringen von Unterdruck von der Negativform aus zur Aufprägung der Form und/oder Oberflächenstruktur der Negativform die Formhaut fertig gestellt. Hierbei wird die vorzugsweise stark erhitzte Folie entsprechend umgeformt bzw. eine gewünschte Oberflächenstruktur aufgebracht. Insbesondere aufgrund der Vorverformung mittels der Positivform wird hier eine im Wesentlichen gleichmäßige Dicke der Folie erreicht. Außerdem wird bei dem Vakuumverformen an der Negativform erreicht, dass der Einleger oberflächenbündig und im Wesentlichen spaltfrei in die übrige Formhaut angepasst wird, wodurch sich die qualitative Anmutung der Formhaut sehr erhöht.

Vorteil des Verfahrens ist außerdem, dass an der Positiv- bzw. Negativform keine Veränderungen vorgenommen werden müssen zur Einpassung des Einlegers, hierdurch fallen keine erhöhten Werkzeugkosten an und das von den Kraftfahrzeugherstellern gewünschte "Base to Premium" ist mit einem einzigen Werkzeug möglich.

Die erfindungsgemäße Formhaut stellt eine dreidimensional geformte Folie zur Bedeckung eines Innenverkleidungsteils für Kraftfahrzeuge dar, wobei auf die oben beschriebene Weise auf der zu einem Kraftfahrzeuginnenraum angeordneten Seite der Einleger eingebracht ist.

Vorteilhafte Weiterbildungen der vorliegenden Erfindung werden in den abhängigen Ansprüchen angegeben.

Eine vorteilhafte Weiterbildung des Verfahrens besteht darin, dass die Formhaut im Anschluss hinterschäumt, hinterspritzt oder hinterprägt (bzw. hinterspritzprägt) und/oder mit einem Träger versehen wird. Somit sind übliche Verfahren zur Erreichung eines "Soft-Touch"-Effekts bzw. zur Kaschierung mit der erfindungsgemäßen Formhaut möglich.

Eine weitere Weiterbildung sieht vor, dass die Positivform einen geringeren Flächenbereich der Folie berührt als die Negativform. Prinzipiell kann die Positivform denselben oder auch einen größeren Flächenbereich der Folie umfassen als die Negativform. Normalerweise wird dieser Flächenbereich in etwa gleich sein, um die oben beschriebene Vorverformung der Folie durch die Positivform umfassend zu erreichen. Bei Folien mit einem sehr guten Dehnungsverhalten, bei denen also eine gleichmäßige Wanddicke auch im Negativvakuumformwerkzeug ohne Vorstreckung erreichbar ist, kann allerdings die Positivform auch einen deutlich kleineren Prozentbereich der sich berührenden Oberflächen ausmachen. Hier reicht es im Prinzip aus, wenn die Positivform ein "Widerlager" zu dem Stempel, der auf der anderen Seite der Folie den Einleger aufbringt, darstellt. Ansonsten kann auch die Positivform noch etwas größer ausfallen, beispielsweise um eine Vorverformung im Bereich besonders starker Topografiesprünge zu erreichen.

Eine kleine Fläche der Positivform (beispielsweise zwischen 1 und 5% Berührfläche bezogen auf die Oberfläche zwischen Negativform und Folie) ist prinzipiell möglich, wenn es lediglich um das Aufstempeln des Einlegers geht. Bei Umformprozessen, bei denen neben dem Vakuumumformen in der Negativform auch ein "Pressanteil" enthalten ist, bei dem also zwischen Positivform und Negativform durch Pressen eine Umformung (zusätzlich) erreicht wird, sind größere Überdeckungen sowie der Verzicht auf einen Restspalt zwischen Negativform und Positivform im Endzustand sinnvoll.

Eine weitere vorteilhafte Weiterbildung sieht vor, dass das Aufstempeln des Einlegers von einem Stempel durchgeführt wird, der seitlich in das den Spannrahmen enthaltende Werkzeug eingeführt wird. Hierdurch wird ermöglicht, dass ein entsprechender Stempel leicht nachrüstbar ist zu einem bestehenden Formwerkzeug. Bei Formwerkzeugen, die lediglich einen Spannrahmen und eine Negativform vorsehen, kann auch die Positivform seitlich herangeführt werden, insbesondere dann, wenn diese nur mit einem sehr kleinen Flächenbereich der Folie in Berührung kommen soll, um dort die Funktion des Stempelwiderlagers zu erfüllen.

Eine weitere vorteilhafte Weiterbildung sieht vor, dass die Folie vor dem Kontakt mit der Positivform eine Temperatur zwischen 160°C und 250°C, vorzugsweise zwischen 210°C und 220°C aufweist, das Material der Folie ist hierbei vorzugsweise einschichtiges TPO-Material (TPO = thermoplastisches Olefin). Es können hier allerdings auch beliebige andere Kunststofffolien, die für die Verwendung beim Negativvakuumumformen geeignet sind, zur Anwendung kommen.

Die Materialwahl beim Einleger ist relativ offen, dieser kann aus Kunststoff, Metall, Holz oder ähnlichen Materialien sein. Eine hohe Temperaturstabilität ist bei Einlegern vorteilhaft.

Eine besonders vorteilhafte Weiterbildung sieht vor, dass der Einleger zweischichtig ist, wobei die Oberschicht des Einlegers vor dem Fertigstellen der Formhaut bzw. des Innenverkleidungsteils von einem Resteinleger abziehbar ist, um eine umlaufende und definierte Vertiefung des Resteinlegers zum benachbarten Abschnitt der Formhaut zu erreichen.

Hierdurch wird zum einen eine sehr hochwertige qualitative Anmutung geschaffen. Außerdem wird erreicht, dass der Einleger nicht durch eine bestimmte Oberflächenstruktur des Negatiwakuumformwerzeugs beschädigt wird. Schließlich ist vorteilhaft, dass leichte Abweichungen im Tiefenversatz vom Betrachterauge nicht so stark wahrgenommen werden wie bei oberflächenbündigen Resteinlegern. Bei der erfindungsgemäßen Formhaut sollte der Tiefenversatz zwischen dem Einleger und dem den Einleger umgebenden Abschnitt der Formhaut zwischen 1 und 10 mm betragen, wobei die Schwankungen des Tiefenversatzes bei einem Umlauf der sichtseitigen Randkontur des Einlegers vorzugsweise weniger als 1 mm betragen.

Auch der Spalt in der Flächenebene der Formhaut gegenüber dem Einleger sollte möglichst klein sein, maximal 1 mm, vorzugsweise maximal 0,5 mm, besonders vorzugsweise 0,1 mm nicht übersteigen. Hierbei ist allerdings produktionstechnisch günstig, dass bei einem Tiefenversatz des Resteinlegers durch den begrenzten Lichteinfall ein zurück versetzter Spalt weniger sichtbar ist als bei oberflächenbündigen Anordnungen.

Eine weitere vorteilhafte Weiterbildung sieht vor, dass der (Rest-)Einleger gegenüber der umliegenden Formhaut zurückversetzt ist und der Krümmungsradius des Randes der Formhaut um den Einleger herum kleiner als 3 mm, vorzugsweise kleiner als 1 mm beträgt. Solche kleinen Krümmungsradien sind produktionstechnisch leicht und trotzdem in bester Qualität zu fertigen, da durch die abnehmbare Oberschicht des Einlegers eine entsprechende Vorgabe der Randstruktur durch die Oberschichtrandkontur des Einlegers möglich ist und somit (ohne hohe Werkzeugkosten) die Randstruktur der Formhaut um den Resteinleger herum beliebig gut einstellbar ist. Wichtig ist hier außerdem, dass durch die Referenzierung der Oberschicht auf den Resteinleger sich die Toleranzen deutlich günstiger darstellen als bei einer Vorgabe der Randstruktur der Formhaut durch das Negativformwerkzeug, bei dem die räumliche Beziehung zum Einleger toleranzbehaftet wäre.

Eine weitere vorteilhafte Ausführung sieht vor, dass der Einleger als Platzhalter ausgestaltet ist, der vor Fertigstellung der Formhaut durch einen endgültigen Einleger, der in der Formhaut verbleibt, ersetzt wird. Hierdurch wird (beispielsweise bei oberflächenbündigen) Einlegern eine größtmögliche Schonung des Einlegers beim Produktionsprozess erreicht. Außerdem ist dieses Verfahren günstig bei Einlegern, die auf eine hohe Temperatur der Folie negativ reagieren.

Weitere vorteilhafte Weiterbildungen werden in den übrigen abhängigen Ansprüchen angegeben.

Die Erfindung wird nun anhand mehrerer Figuren erläutert. Es zeigen:
- Fig. 1a: eine Negativform, eine Positivform sowie einen eine Folie haltenden Spannrahmen zu Beginn des erfindungsgemäßen Verfahrens,
- Fig. 1b: eine von der Positivform verformte Folie vor dem Aufstempeln des Einlegers,
- Fig. 1c: die in der Negativform durch Unterdruck er- zeugte Formhaut mit eingelegtem zweischich- tigem Einleger,
- Fig. 2a: ein fertiges Innenverkleidungsteil mit Resteinleger, und
- Fig. 2b: eine Detailansicht des Bereichs um den Resteinleger aus Fig. 2a.

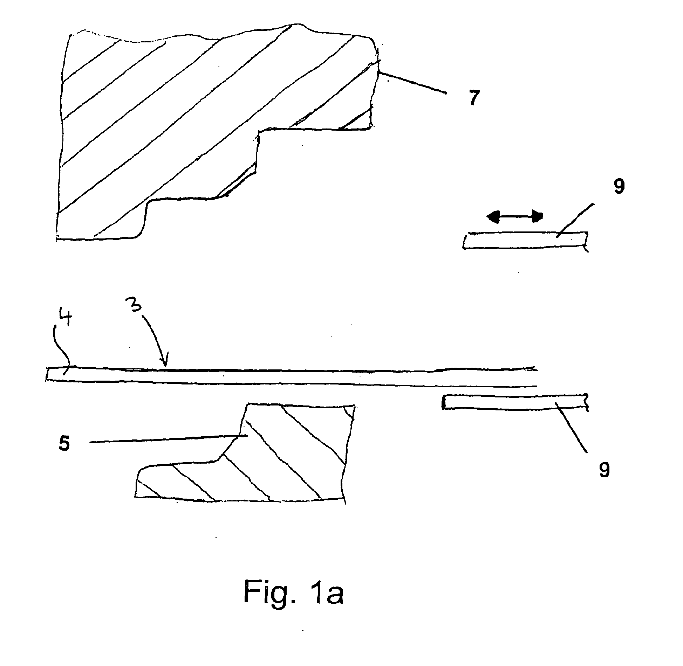

- Fig. 1a: zeigt ein Werkzeug vor Durchführung des er- findungsgemäßen Verfahrens. Gezeigt ist hier eine Positivform 5, darüber liegend ein Spannrahmen 4, der eine Folie 3 gespannt hält. Oberhalb des Spannrahmens ist eine Negativform 7 angeordnet, die in den Figuren nicht näher dargestellten Vakuumöffnungen (diese können beispielsweise als poröse Oberflächen der Negativform verwirklicht sein) aufweist. Zwei plattenförmige Heizungen 9 sind, wie mit Doppelpfeil oberhalb der oberen Heizplatte 9 angedeutet, über den Spannrahmen bzw. die Folie verschiebbar, um somit die Folie auf eine Temperatur zwischen 160°C und 250°C, vorzugsweise zwischen 210°C und 220°C aufzuheizen.

Die Positivform kann zusätzlich mit hier nicht dargestellten Vakuumöffnungen zum Ansaugen und Fixieren der Folie 3 versehen sein.

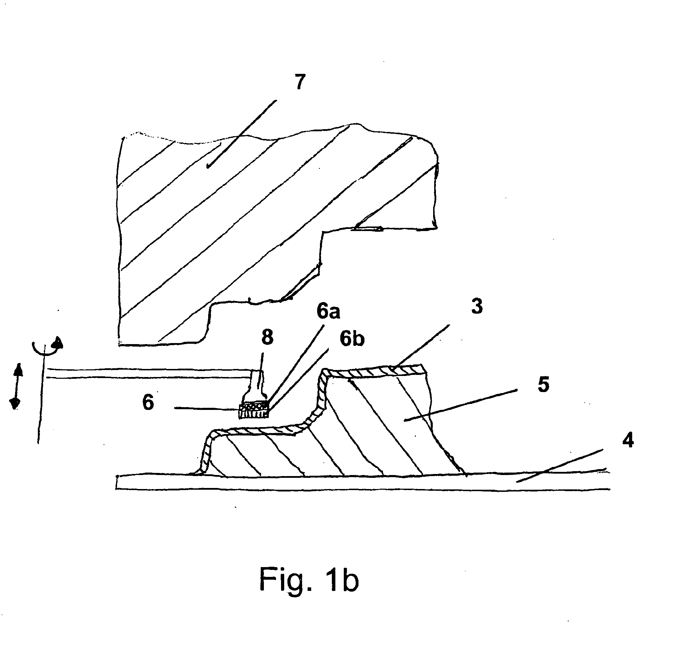

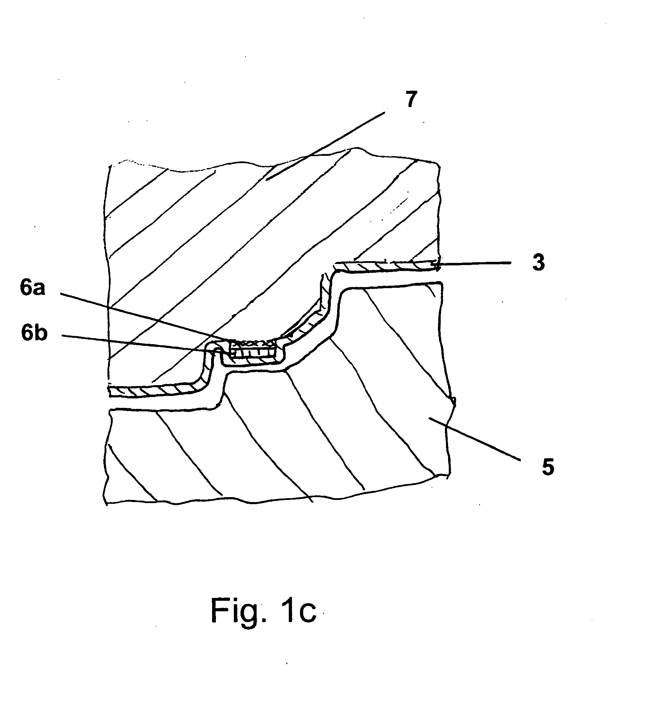

Nach Aufheizen der Folie 3 und Zurückziehen der plattenförmigen Heizung 9 in die in Fig. 1a gezeigte Lage verfährt die Positivform 5 gegen die Folie, so dass sich das in Fig. 1b gezeigte Bild ergibt. In dieser Lage ist die Folie 3 vorverformt, die Folie nimmt im Wesentlichen die Form der Positivform 5 auf, diese ist im Wesentlichen korrespondierend zur Form der Negativform 7. In dieser Lage hält die Positivform 5 inne und es wird ein zweischichtiger Einleger 6 mittels eines Stempels 8 auf die Folie 3 gedrückt. Der Einleger besteht aus einer Oberschicht 6a sowie einem Resteinleger 6b, wobei die in Fig. 1b gezeigte Unterseite des Resteinlegers mit einem wärmeaktivierbaren Klebstoff versehen ist, der ab ca. 40°C klebende Eigenschaften hat. Dieser wird mit der ca. 210°C heißen Folie, diese ist aus einem thermoplastischen Olefin und einschichtig ausgestaltet, verbunden. Der Einleger 6 besteht aus der aus Kunststoff bestehenden Oberschicht 6a und einem aus Holz bestehenden Stück 6b. Der Stempel 8 wird z.B. mittels eines Schwenkmechanismus (siehe Schwenkrichtung um die Hochachse in Fig. 1b) zwischen die Positivform 5 und die Negativform 7 geschwenkt, so dass der Stempel oberhalb der beabsichtigten Positionierstelle des Einlegers 6 auf der Folie 3 aufgebracht werden kann. Das Stempeln erfolgt über eine Hubbewegung, wie sie in Fig. 1b links durch Doppelpfeil angedeutet gezeigt ist. Alternativ dazu kann auch eine Aufwärtsbewegung der Positivform 5 erfolgen. Im vorliegenden Fall ist die Berührfläche der Positivform 5 mit der Folie 3 genauso groß wie die Berührfläche der Negativform 7 mit der Folie 3. Nach einem Herausschwenken des Stempels 8 aus dem Zwischenraum zwischen Positivform 5 und Negativform 7 wird ein starker Unterdruck auf die Vakuumöffnungen der Negativform 7 aufgebracht, so dass die Folie 3 sich um den zweischichtigen Einleger 6 herum an die Negativform 7 ansaugt. Es entsteht der in Fig. 1c gezeigte Zustand. Je nach Ausgestaltung des Verfahrens kann ein "Nachpressen" mittels der Positivform 5 erfolgen, wobei hier gegebenenfalls eine Aussparung für den von dem Einleger ausgewölbten Bereich in der Positivform 5 vorzusehen ist.

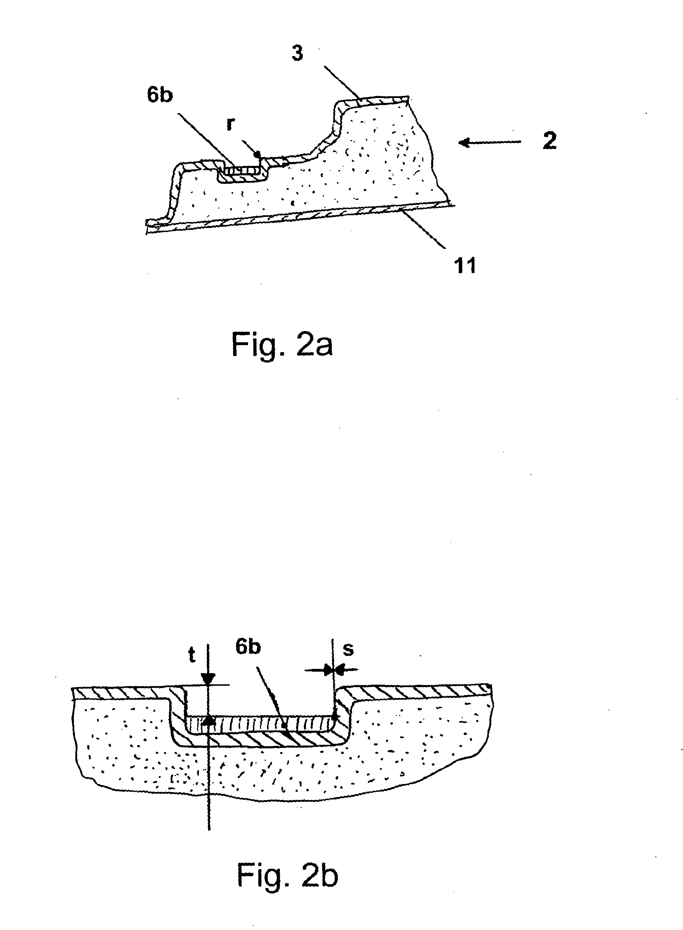

Nach Entnahme und Abkühlung der nun fertigen Formhaut, bei der eventuell auch noch eine Oberflächenstruktur der Negativform 7 auf die Folie bzw. Formhaut aufgeprägt wurde, wird diese aus dem Werkzeug entnommen oder auch in demselben Werkzeug hinterschäumt, hinterspritzt oder hinterprägt sowie mit einem Träger 11 versehen. Es ergibt sich nach Abziehen der Oberschicht 6a der in Fig. 2a gezeigte Zustand, der ein fertiges Innenverkleidungsteil 2 zeigt.

In einer alternativen Variante des Verfahrens kann der Einleger auch einteilig gewählt sein bzw. es kann auch ein Einleger als "Platzhalter" eingelegt werden, der vor Fertigstellung der Formhaut durch einen endgültigen Einleger, der in der Formhaut verbleibt ersetzt wird.

Ein wichtiger Aspekt der Erfindung besteht darin, dass der Einleger 6 bzw. Resteinleger 6b qualitativ hochwertig in die übrige Formhaut eingepasst ist. Hierbei ist vorteilhaft, dass der Spalt s (siehe Fig. 2b) möglichst gering ist, vorliegend unter 0,1 mm. Selbst bei einem kleinen Restspalt ist dies allerdings nicht sehr störend, da in Fig. 2b der Resteinleger 6b gegenüber der umgebenden Formhaut um den Tiefenversatz t zurückgesetzt ist, dieser Tiefenversatz beträgt vorliegend 5 mm. Die Schwankungen des Tiefenversatzes betragen vorliegend weniger als 1 mm.

Der Krümmungsradius r (siehe Fig. 2a) ist außerdem beliebig einstellbar, vorliegend beträgt er weniger als 3 mm. Die Krümmung ist hierbei durch eine entsprechende Formgebung der Oberschicht 6a des Einlegers 6 vorgebbar, hier kann eine entsprechende Randkontur vorgesehen sein auf der der Negativform 7 zugewandten Seite der Oberschicht 6a, mit der hier praktisch beliebige Randgeometrien der Formhaut erzeugbar sind.

### Bezugszeichenliste:

- 1: Formhaut
- 2: Innenverkleidungsteil
- 3: Folie
- 4: Spannrahmen
- 5: Positivform
- 6: Einleger:
6a Oberschicht;
6b Resteinleger
- 7: Negativform
- 8: Stempel
- 9: Heizung
- r: Krümmungsradius
- s: Spalt
- t: Tiefenversatz

## Patentansprüche

1. Verfahren zum Herstellen einer Formhaut (1), insbesondere für Innenverkleidungsteile (2) von Kraftfahrzeuge, enthaltend die Schritte:
a) Einlegen einer Folie in einen Spannrahmen (4),
b) Verfahren einer Positivform (5) gegenüber dem Spannrahmen (4) zur (Vor-)Verformung der Folie,
c) Aufstempeln eines Einlegers (6) auf der der Positivform abgewandten Seite der Folie,
d) Verfahren der Positivform (5) in eine zumindest bereichsweise korrespondierende Negativform (7) und
e) Aufbringen von Unterdruck von der Negativform (7) aus zur Aufprägung der Form und/oder Oberflächenstruktur der Negativform auf die mit dem Einleger (6) belegte Folie (3).

2. Verfahren nach Anspruch 1, **dadurch gekennzeichnet, dass** die Formhaut (1) zur Herstellung eines Innenverkleidungsteils (2) anschließend hinterschäumt, hinterspritzt oder hinterprägt wird.

3. Verfahren nach einem der vorhergehenden Ansprüche, **dadurch gekennzeichnet, dass** die Positivform einen geringeren Flächenbereich der Folie berührt als die Negativform (7).

4. Verfahren nach Anspruch 1 oder 2, **dadurch gekennzeichnet, dass** die mit der Folie (3) in Kontakt bringbare Oberfläche der Positivform (5) zwischen 1 und 100%, vorzugsweise zwischen 1 und 5% oder zwischen 90 und 100% der mit der Folie in Kontakt bringbaren Oberfläche der Negativform (7) beträgt.

5. Verfahren nach einem der vorhergehenden Ansprüche, **dadurch gekennzeichnet, dass** das Aufstempeln des Einlegers von einem Stempel (8) ausgeführt wird, der seitlich in das den Spannrahmen (4) enthaltende Werkzeug eingeführt wird.

6. Verfahren nach einem der vorhergehenden Ansprüche, **dadurch gekennzeichnet, dass** die Folie (3) vor dem Kontakt mit der Positivform (5) eine Temperatur zwischen 160 und 250°C, vorzugsweise zwischen 210 und 220°C aufweist.

7. Verfahren nach einem der vorhergehenden Ansprüche, **dadurch gekennzeichnet, dass** das Material der Folie (3) ein TPO-Material (TPO = thermoplastisches Olefin) ist.

8. Verfahren nach einem der vorhergehenden Ansprüche, **dadurch gekennzeichnet, dass** das Material des Einlegers (6) Kunststoff, Metall oder Holz ist.

9. Verfahren nach einem der vorhergehenden Ansprüche, **dadurch gekennzeichnet, dass** der Einleger (6) zweischichtig ist, wobei die Oberschicht (6a) des Einlegers vor dem Fertigstellen der Formhaut (1) bzw. des Innenverkleidungsteils (2) von einem Resteinleger (6b) abziehbar ist, um eine umlaufende definierte Vertiefung des Resteinlegers (6b) zum benachbarten Abschnitt der Formhaut zu erreichen.

10. Verfahren nach einem der Ansprüche 1 bis 8, **dadurch gekennzeichnet, dass** der Einleger als Platzhalter ausgestaltet ist, der vor Fertigstellung der Formhaut (1) durch einen endgültigen Einleger, der in der Formhaut verbleibt, ersetzt wird.

11. Verfahren nach einem der Ansprüche 1 bis 10, **dadurch gekennzeichnet, dass** der Einleger (6) und/oder der hiermit in Verbindung zu bringende Abschnitt der Folie (3) vor dem Aufstempeln mit wärmeaktivierbarem Klebstoff versehen werden zum Fügen von Einleger (6) und Folie (3).

12. Verfahren nach einem der Ansprüche 1 bis 11, **dadurch gekennzeichnet, dass** der Einleger gegenüber der umliegenden Formhaut zurückversetzt ist, wobei der Krümmungsradius des Randes der Formhaut um den Einleger herum weniger als 3 mm, vorzugsweise weniger als 1 mm beträgt.

13. Verfahren nach einem der Ansprüche 1 bis 12, **dadurch gekennzeichnet, dass** der Spalt (s) in der Flächenebene der Formhaut (1) maximal 1 mm, vorzugsweise maximal 0,5 mm, besonders vorzugsweise 0,1 mm nicht übersteigt.

14. Verfahren nach einem der Ansprüche 1 bis 13, **dadurch gekennzeichnet, dass** der Tiefenversatz (t) zwischen dem Einleger (6) und dem den Einleger umgebenden Abschnitt der Formhaut zwischen 1 mm und 10 mm beträgt, wobei die Schwankungen des Tiefenversatzes bei einem Umlauf der sichtseitigen Randkontur des Einlegers weniger als 1 mm betragen.

## Claims

1. A method for producing a moulded skin (1), in particular for interior trim pieces (2) of motor vehicles, containing the steps:
a) inserting a sheet into a clamping frame (4),
b) moving a male mould (5) relative to the clamping frame (4) for (pre-)deforming the sheet,
c) stamping-on an insert (6) on the side of the sheet which is remote from the male mould,
d) moving the male mould (5) into a female mould (7) which corresponds at least in regions, and
e) applying a partial vacuum from the female mould (7) for embossing the shape and/or surface structure of the female mould onto the sheet (3) equipped with the insert (6).

2. A method according to Claim 1, **characterised in that** the moulded skin (1) is then foam-backed, back-injection-moulded or back-embossed in order to produce an interior trim piece (2).

3. A method according to one of the preceding claims, **characterised in that** the male mould contacts a smaller surface area of the sheet than the female mould (7).

4. A method according to Claim 1 or 2, **characterised in that** the surface of the male mould (5) which can be brought into contact with the sheet (3) is between 1 and 100%, preferably between 1 and 5% or between 90 and 100%, of the surface of the female mould (7) which can be brought into contact with the sheet.

5. A method according to one of the preceding claims, **characterised in that** the stamping-on of the insert is carried out by a stamp (8) which is introduced laterally into the tool containing the clamping frame (4).

6. A method according to one of the preceding claims, **characterised in that** the sheet (3) before the contact with the male mould (5) has a temperature of between 160 and 250°C, preferably between 210 and 220°C.

7. A method according to one of the preceding claims, **characterised in that** the material of the sheet (3) is a TPO material (TPO = thermoplastic olefin).

8. A method according to one of the preceding claims, **characterised in that** the material of the insert (6) is plastics material, metal or wood.

9. A method according to one of the preceding claims, **characterised in that** the insert (6) is two-layered, the upper layer (6a) of the insert being able to be peeled off from a residual insert (6b) before the moulded skin (1) or the interior trim piece (2) is produced, in order to obtain a circumambient defined recess of the residual insert (6b) relative to the adjacent section of the moulded skin.

10. A method according to one of Claims 1 to 8, **characterised in that** the insert is designed as a placeholder which before the moulded skin (1) is produced is replaced by a final insert which remains in the moulded skin.

11. A method according to one of Claims 1 to 10, **characterised in that** the insert (6) and/or the section of the sheet (3) which is to be joined thereto, before the stamping-on, is/are provided with heat-activated adhesive for joining the insert (6) and the sheet (3).

12. A method according to one of Claims 1 to 11, **characterised in that** the insert (6) is set back from the surrounding moulded skin, the radius of curvature of the edge of the moulded skin around the insert being less than 3 mm, preferably less than 1 mm.

13. A method according to one of Claims 1 to 12, **characterised in that** the gap (s) in the surface plane of the moulded skin (1) does not exceed a maximum of 1 mm, preferably a maximum of 0.5 mm, particularly preferably 0.1 mm.

14. A method according to one of Claims 1 to 13, **characterised in that** the depth offset (t) between the insert (6) and the section of the moulded skin surrounding the insert is between 1 mm and 10 mm, the fluctuations in the depth offset on running around the visible-side edge contour of the insert being less than 1 mm.

## Revendications

1. Procédé de fabrication d'une peau de moulage (1), en particulier pour des pièces d'habillage intérieur (2) de véhicules automobiles, contenant les étapes consistant à :
a) insérer une feuille dans un cadre de serrage (4),
b) déplacer un moule positif (5) par rapport au cadre de serrage (4) pour (pré-)déformer la feuille,
c) presser un élément d'insertion (6) sur la face de la feuille opposée au moule positif,
d) déplacer le moule positif (5) dans un moule négatif (7) correspondant au moins par zones, et
e) appliquer une dépression à partir du moule négatif (7) pour imprimer la forme et/ou la structure superficielle du moule négatif sur la feuille (3) pourvue(s) de l'élément d'insertion (6).

2. Procédé selon la revendication 1, **caractérisé en ce que** la peau de moulage (1) est ensuite moulée par moussage, moulée par injection ou moulée par estampage pour fabriquer une pièce d'habillage intérieur (2).

3. Procédé selon l'une quelconque des revendications précédentes, **caractérisé en ce que** le moule positif vient en contact avec une zone de surface plus petite que le moule négatif (7).

4. Procédé selon la revendication 1 ou 2, **caractérisé en ce que** la surface du moule positif (5) pouvant être mise en contact avec la feuille (3) est comprise entre 1 et 100 %, de préférence entre 1 et 5 % ou entre 90 et 100 % de la surface du moule négatif (7) pouvant être mise en contact avec la feuille.

5. Procédé selon l'une quelconque des revendications précédentes, **caractérisé en ce que** le pressage de l'élément d'insertion est assuré par un poinçon (8), qui est introduit latéralement dans l'outil contenant le cadre de serrage (4).

6. Procédé selon l'une quelconque des revendications précédentes, **caractérisé en ce que** la feuille (3) présente, avant contact avec le moule positif (5), une température comprise entre 160 et 250 °C, de préférence entre 210 et 220 °C.

7. Procédé selon l'une quelconque des revendications précédentes, **caractérisé en ce que** le matériau de la feuille (3) est un matériau à base de TPO (TPO = oléfine thermoplastique).

8. Procédé selon l'une quelconque des revendications précédentes, **caractérisé en ce que** le matériau de l'élément d'insertion (6) est un matériau synthétique, un métal ou du bois.

9. Procédé selon l'une quelconque des revendications précédentes, **caractérisé en ce que** l'élément d'insertion (6) présente deux couches, dans lequel la couche supérieure (6a) de l'élément d'insertion peut être retirée d'un élément d'insertion résiduel (6b) avant la finition de la peau de moulage (1) ou de la pièce d'habillage intérieur (2) pour obtenir un creux périphérique défini de l'élément d'insertion résiduel (6b) pour la section adjacente de la peau de moulage.

10. Procédé selon l'une quelconque des revendications 1 à 8, **caractérisé en ce que** l'élément d'insertion est conçu comme un substitut qui, avant la finition de la peau de moulage (1), est remplacé par un élément d'insertion final restant dans la peau de moulage.

11. Procédé selon l'une quelconque des revendications 1 à 10, **caractérisé en ce que** l'élément d'insertion (6) et/ou la zone de la feuille (3) à amener en contact avec celui-ci est ou sont pourvus, avant pressage, d'une colle activable à chaud pour assembler l'élément d'insertion (6) et la feuille (3).

12. Procédé selon l'une quelconque des revendications 1 à 11, **caractérisé en ce que** l'élément d'insertion est en retrait par rapport à la peau de moulage périphérique, dans lequel le rayon de courbure du bord de la peau de moulage autour de l'élément d'insertion est inférieur à 3mm, de préférence inférieure à 1 mm.

13. Procédé selon l'une quelconque des revendications 1 à 12, **caractérisé en ce que** l'écartement (s) dans le plan de surface de la peau de moulage (1) ne dépasse pas au maximum 1 mm, de préférence au maximum 0,5mm, mieux encore 0,1mm.

14. Procédé selon l'une quelconque des revendications 1 à 13, **caractérisé en ce que** le décalage en profondeur (t) entre l'élément d'insertion (6) et la zone de la peau de moulage entourant l'élément d'insertion est compris entre 1mm et 10mm, les variations du décalage en profondeur étant inférieures à 1mm lors en faisant le tour du contour du bord côté visible de l'élément d'insertion.
